# EUROPÄISCHE PATENTSCHRIFT

(11) **EP 3 347 608 B1**
(45) Veröffentlichungstag und Bekanntmachung des Hinweises auf die Patenterteilung: **25.09.2019**
(21) Anmeldenummer: 16753624.2
(22) Anmeldetag: 09.08.2016
(51) Int. Cl.: F16C 11/06

(54) **KUGELGELENK MIT EINER SCHUTZKAPPE UND ZWEIPUNKTLENKER MIT EINEM DERARTIGEN KUGELGELENK**
BALL JOINT COMPRISING A PROTECTIVE CAP AND TWO-POINT LINKAGE COMPRISING A BALL JOINT OF THIS TYPE
JOINT À ROTULE ÉQUIPÉ D'UN CAPUCHON DE PROTECTION ET BRAS DE SUSPENSION À DEUX POINTS ÉQUIPÉ D'UN TEL JOINT À ROTULE

(30) Priorität: 09.09.2015 DE 102015217219
(43) Veröffentlichungstag der Anmeldung: 18.07.2018
(73) Patentinhaber: ZF Friedrichshafen AG, 88046 Friedrichshafen (DE)
(72) Erfinder: REDDEHASE, Günter, 49448 Brockum (DE); ALTMEPPEN, Janina, 49124 Georgsmarienhütte (DE)
(86) Internationale Anmeldenummer: PCT/EP2016/068933
(87) Internationale Veröffentlichungsnummer: WO 2017/041974

(56) Entgegenhaltungen:
- EP-A1- 0 658 469
- WO-A1-02/101250
- DE-T2- 60 316 852
- US-A1- 2002 160 842

## Beschreibung

Kugelgelenk mit einer Schutzkappe und Zweipunktlenker mit einem derartigen Kugelgelenk.

Die Erfindung betrifft ein Kugelgelenk mit einer solchen Schutzkappe sowie einen Zweipunktlenker mit einem derartigen Kugelgelenk gemäß den Oberbegriffen der Patentansprüche 1 und 10.

Schutzkappen zur bereichsweisen Abdeckung komplett montierter Kugelgelenke sind aus dem Stand der Technik bekannt. In der DE 102 42 578 A1 ist eine Schutzkappe offenbart, welche eine Wandung aufweist, die dazu geeignet ist, einen abzudeckenden Bereich des Kugelgelenks zu umschließen. Ein Dichtungsbalg des Kugelgelenks wird von der Wandung der Schutzkappe komplett umschlossen, wobei die Außenoberfläche des Dichtungsbalgs die Innenoberfläche der Wandung der Schutzkappe abschnittsweise berührt.

In der DE 102 23 306 A1 ist ein Kugelgelenk mit einem Gehäuse beschrieben, wobei das Gehäuse einstückig mit einem Schaft ausgebildet ist. Der Schaft weist ein Rillenprofil zur Verbindung des Schaftes mit einem Verbindungsrohr auf. Nach dem Einschieben des Schaftes in einen Endabschnitt des Verbindungsrohrs wird der Endabschnitt des Verbindungsrohres durch eine Pressvorrichtung zusammengepresst. Dabei wird die Innenkontur dieses Endabschnitts des Verbindungsrohres der Außenkontur des Schaftes angepasst. In der Praxis wird der Endabschnitt des Verbindungsrohres vor dem Zusammenpressen häufig auf Temperaturen oberhalb von 800 Grad Celsius erwärmt, wohingegen der Schaft vor dem Zusammenpressen nicht erwärmt wird. Das Zusammenpressen des zuvor erwärmten Endabschnitts des Verbindungsrohres durch Warmumformung wird auch als Warmeinschlagen bezeichnet. Das Warmeinschlagen hat den Vorteil, dass ein besonders fester Sitz zwischen dem Endabschnitt des Verbindungsrohres und dem Schaft des Kugelgelenks erreicht wird, weil der den Schaft umschließende Endabschnitt des Verbindungsrohres nach dem Warmeinschlagen während des Abkühlens schrumpft und sich dadurch fest an den Schaft anlegt. Nachteilig bei diesem Verfahren ist, dass der Dichtungsbalg erst nach dem Warmeinschlagen montiert werden kann, um eine Schädigung desselben durch die Strahlungswärme zu vermeiden, die der zuvor erwärmte Endabschnitt des Verbindungrohres nach dem Warmeinschlagen abgibt.

Bei der Herstellung von Lenkstangen, insbesondere von Lenkstangen für Lastkraftwagen oder Busse, bedeutet dies beispielsweise, dass zunächst das Kugelgelenk ohne Dichtungsbalg vormontiert werden muss. Anschließend wird der Schaft des vormontierten Kugelgelenks durch Warmeinschlagen mit dem Endabschnitt des Verbindungsrohres verbunden. Erst nach dem Abkühlen des Endabschnitts des Verbindungsrohres kann der Dichtungsbalg des Kugelgelenks und eine den Dichtungsbalg während des weiteren Fertigungsdurchlaufs schützende Abdeckkappe in einem zusätzlichen Arbeitsgang montiert werden. Dies ist mit einem relativ hohen Aufwand verbunden, weil der Unterzusammenbau aus Kugelgelenk und Verbindungsrohr in Abhängigkeit von den jeweiligen Abmessungen der Lenkstange relativ sperrig ist. Versuche haben gezeigt, dass ein vor dem Warmeinschlagen montierter Dichtungsbalg durch eine aufgesteckte einwandige Schutzkappe gemäß DE 102 42 578 A1 nicht hinreichend sicher vor der nach dem Warmeinschlagen von dem Endabschnitt des Verbindungsrohres abgegebenen Strahlungswärme schützt, insbesondere wenn die Außenwandung des Dichtungsbalges die Innenwandung der Schutzkappe abschnittsweise berührt. Weitere Lösungen zum Wärmeschutz werden in der DE 603 16 852 T2 vorgeschlagen.

Aufgabe der Erfindung ist es, eine Schutzkappe bereitzustellen, welche den Dichtungsbalg während des Warmeinschlagens vor schädigender Wärmeeinwirkung schützt, so dass der Dichtungsbalg bereits vor dem Warmeinschlagen im Rahmen der Kugelgelenkmontage gefügt werden kann.

Diese Aufgabe wird gemäß der vorliegenden Erfindung gelöst durch eine gattungsgemäße Schutzkappe, welche zusätzlich die kennzeichnenden Merkmale des Patentanspruchs 1 aufweist.

Bevorzugte Ausführungsformen und Weiterbildungen sind Gegenstand der Unteransprüche.

Die Erfindung sieht demnach eine Schutzkappe zur bereichsweisen Abdeckung eines komplett montierten Kugelgelenks vor, wobei die Schutzkappe eine Wandung aufweist, die dazu geeignet ist, einen abzudeckenden Bereich des Kugelgelenks zu umschließen. Zum bereichsweisen Schutz des Kugelgelenks vor schädigender Wärmeeinwirkung weist die Schutzkappe erfindungsgemäß zumindest eine von der Wandung beabstandete Zusatzwandung auf.

Unter einem komplett montierten Kugelgelenk ist im Zusammenhang mit der vorliegenden Erfindung ein Kugelgelenk zu verstehen, welches funktionstüchtig und für den Einbau in ein Fahrzeug vorbereitet ist. Das Kugelgelenk weist insbesondere einen Kugelzapfen auf, welcher mit einer endseitig angeordneten Gelenkkugel dreh- und schwenkbeweglich in einem Gehäuse des Kugelgelenks gelagert ist. Ein der Gelenkkugel abgewandter Abschnitt des Kugelzapfens erstreckt sich aus einer Öffnung des Gehäuses heraus, wobei die Gehäuseöffnung durch einen Dichtungsbalg gegen ein Eindringen von Staub, Schmutz und Feuchtigkeit abgedichtet ist. Während das Gehäuse und der Kugelzapfen aus Stahl gebildet sind, besteht der Dichtungsbalg vorzugsweise aus einem Elastomerwerkstoff, welcher temperaturempfindlicher ist als die Stahlbauteile des Kugelgelenks. Durch die Wandung und die von dieser beabstandete Zusatzwandung wird ein doppelwandiger Bereich der Schutzkappe mit einer zwischenliegenden Luftschicht geschaffen. Aufgrund einer wärmeisolierenden Wirkung der Luftschicht wird verhindert, dass von außen auf den doppelwandigen Bereich einwirkende Wärme zu einer Schädigung des Bereichs des komplett montierten Kugelgelenks führt, welcher durch den doppelwandigen Bereich der Schutzkappe abdeckbar ist. Insbesondere wird zumindest ein Teil des relativ temperaturempfindlichen Dichtungsbalges durch den doppelwandigen Bereich abgedeckt, um diesen vor schädigender Strahlungswärme aus einem Warmfügeprozess, insbesondere einem Warmeinschlagen, zu schützen.

Die Schutzkappe kann in Abhängigkeit von der Art und der Anzahl der Wärmequelle(n) in einem oder in mehreren zusammenhängenden oder voneinander beabstandeten Teilbereichen eine von der Wandung beabstandete Zusatzwandung aufweisen. Die zumindest eine Zusatzwandung kann beispielsweise als eine Art Schild ausgebildet sein, um einen partiellen Schutz vor schädigender Wärmeeinwirkung bereitzustellen. Die Schutzkappe mit Wandung und Zusatzwandung ist vorzugsweise einstückig ausgeführt und aus Kunststoff gebildet. Hergestellt wird die Schutzkappe vorteilhaft im Kunststoff-Spritzgussverfahren. Die Schutzkappe ist bevorzugt als vollständig geschlossener Becher ausgebildet, wobei die Wandung in dem oberen Bereich des Bechers durch eine oder mehrere ringförmig angeordnete Ablauföffnungen unterbrochen sein kann. Nach dem bestimmungsgemäßen Gebrauch weist die Schutzkappe die gleichen geometrischen und stofflichen Eigenschaften auf wie vor dem Gebrauch. Eine Mehrfachverwendung der Schutzkappe ist daher möglich.

Vorzugsweise ist die Zusatzwandung ringartig geschlossen ausgebildet. Mit einer ringartig geschlossenen Ausbildung der Zusatzwandung ist in diesem Zusammenhang gemeint, dass die Zusatzwandung in Umfangsrichtung der Schutzkappe unterbrechungsfrei ausgebildet ist. Auf diese Weise wird an jeder Stelle des Umfangs die zuvor beschriebene Isolierwirkung gegen einwirkende Wärme, insbesondere Strahlungswärme, erzielt. Die Wandung und die Zusatzwandung sind rotationssymmetrisch ausgebildet.

Gemäß einer bevorzugten Ausgestaltung der Erfindung ist die Zusatzwandung radial außerhalb der Wandung angeordnet. Bevorzugt wird die Wandung von der Zusatzwandung bereichsweise ringartig umschlossen. Eine radial außerhalb der Wandung angeordnete Zusatzwandung ist vorteilhaft, weil diese bei der Montage der Schutzkappe stets sichtbar ist und auf diese Weise ein sogenanntes verdecktes Fügen mit von außen nicht sichtbarer Zusatzwandung umgangen wird.

Gemäß einer alternativen Ausgestaltung der Erfindung ist die Zusatzwandung radial innerhalb der Wandung angeordnet. Bei dieser Ausgestaltung stellt die Außenumfangsfläche der Wandung gleichzeitig die Außenumfangsfläche der Schutzkappe dar. Die Außenumfangsfläche der Schutzkappe weist somit in Axialrichtung der Schutzkappe einen kontinuierlichen Verlauf auf, der nicht durch eine aufbauende Zusatzwandung unterbrochen wird. Darüber hinaus ist die Zusatzwandung durch ihre Lage radial innerhalb der Wandung gut vor mechanischen Beschädigungen geschützt. Um die Herstellbarkeit, insbesondere die Entformbarkeit nach einem Spritzgießarbeitsgang zu gewährleisten, kann die Schutzkappe bei innenliegender Zusatzwandung auch mehrteilig ausgebildet sein, beispielsweise mit einer in die Schutzkappe einclipsbaren oder einpressbaren Zusatzwandung.

Bevorzugt ist der Abstand zwischen der Wandung und der Zusatzwandung über den Verlauf der Zusatzwandung konstant. Auf diese Weise ist gewährleistet, dass der doppelwandige Bereich seine wärmeisolierende Wirkung an jeder Stelle seines Umfangs in gleicher Weise entfalten kann. Dies hat den Vorteil, dass beim Aufstecken oder Aufschrauben der insbesondere im Wesentlichen rotationssymmetrisch ausgebildeten Schutzkappe kein zusätzliches Ausrichten des doppelwandigen Bereichs auf die jeweils vorliegende Wärmequelle erforderlich ist. Sollte die Mittelachse der Schutzkappe infolge eines Montagefehlers nicht deckungsgleich mit der Mittelachse des Kugelgelenks sein, ist die wärmeisolierende Wirkung der Schutzkappe trotzdem gegeben. Die durch den konstanten Abstand zwischen der Wandung und der Zusatzwandung gegebene wärmeisolierende Wirkung liegt auch vor, wenn die Außenoberfläche des Dichtungsbalges die Oberfläche der Wandung oder der Zusatzwandung berührt.

In vorteilhafter Weiterbildung der Erfindung ist ein Zwischenraum zwischen der Wandung und der Zusatzwandung in Axialrichtung der Schutzkappe zumindest einseitig offen ausgebildet. Dies hat den Vorteil, dass bei Beaufschlagung des doppelwandigen Bereichs mit Strahlungswärme die infolge der Erwärmung sich ausdehnende Luft in der Luftschicht aus dem Zwischenraum entweichen kann. Durch die zumindest einseitig offene Ausbildung des Zwischenraums, kann dieser darüber hinaus während der Wärmeeinwirkung gut belüftet werden. Dadurch wird in dem Zwischenraum die Bildung eines Wärmestaus wirksam verhindert. Insbesondere weist der Zwischenraum zwei in Axialrichtung der Schutzkappe gegenüberliegende Öffnungen auf, damit während des Einwirkens von Strahlungswärme die erwärmte Luft aus dem Zwischenraum entweichen und kühlere Luft nachströmen kann. Bei radial innerhalb der Wandung angeordneter Zusatzwandung kann bei einem beidseitig offen ausgebildeten Zwischenraum dieser von einer Axialseite aus über die Ablauföffnung(en) belüftet werden, welche die Wandung in einem oberen Abschnitt der Schutzkappe durchdringen.

Vorteilhaft sind die Wandung und die Zusatzwandung in einem doppelwandigen Bereich zumindest im Wesentlichen zylinderringförmig ausgebildet. Die zylinderringförmige Ausbildung kann durch herstellungsbedingt erforderliche Entformungsschrägen geringfügig abweichen, falls die Schutzkappe als Kunststoff-Spritzgussteil ausgebildet ist. Vorzugsweise sind die Wandung und die Zusatzwandung in dem bereits zuvor beschriebenen doppelwandigen Bereich konzentrisch zueinander angeordnet. Bei dieser Ausgestaltung ist der insbesondere in Axialrichtung der Schutzkappe beidseitig offene Zwischenraum ebenfalls zumindest im Wesentlichen zylinderringförmig ausgebildet. Auf diese Weise ist sichergestellt, dass an jeder Stelle des Umfangs der Schutzkappe die gleiche wärmeisolierende Wirkung vorliegt, unabhängig davon, welcher Teil des Umfangs in der jeweiligen Montageposition der Schutzkappe zufällig der Wärmequelle zugewandt ist.

Vorzugsweise wird der Abstand zwischen der Wandung und der Zusatzwandung abschnittsweise durch eine Rippenstruktur überbrückt. Die Rippenstruktur dient der Anbindung der Zusatzwandung an die Wandung und ist in dem Zwischenraum angeordnet. Insbesondere ist die Rippenstruktur einstückig mit der Wandung und der Zusatzwandung ausgebildet. Alternativ kann die Rippenstruktur auch nur einstückig mit der Wandung oder der Zusatzwandung ausgebildet sein, beispielsweise bei einer Ausbildung der Zusatzwandung als separates Bauteil, welches über eine Clipsverbindung oder Einpressverbindung an die Wandung der Schutzkappe angebunden ist.

Gemäß einer Weiterbildung der Erfindung verlaufen die Rippen der Rippenstruktur in Axialrichtung der Schutzkappe. Bei dieser Ausgestaltung kann im Falle einer Wärmebeaufschlagung der Schutzkappe ein guter Luftaustausch in Axialrichtung der Schutzkappe in den und aus dem Zwischenraum erfolgen. Bedingt durch diesen Luftaustausch kann dem Zwischenraum kontinuierlich kühle Umgebungsluft zugeführt und dadurch eine übermäßige Erwärmung der dem Zwischenraum zugewandten Wandbereiche von Wandung und Zusatzwandung vermieden werden.

Die Erfindung betrifft ferner ein Kugelgelenk mit einem Dichtungsbalg, wobei der Dichtungsbalg zumindest bereichsweise durch den doppelwandigen Bereich einer Schutzkappe wie zuvor beschrieben vor schädigender Wärmeeinwirkung, insbesondere Strahlungswärme, geschützt ist. Insbesondere wird der Bereich des Dichtungsbalges, welcher der Strahlungsquelle zugewandt ist, durch den doppelwandigen Bereich der Schutzkappe abgedeckt. Durch die wärmeisolierend wirkende Luftschicht zwischen der Wandung und der davon beabstandeten Zusatzwandung ist der Schutz des Dichtungsbalges vor Schäden durch Temperatureinwirkung gewährleistet, selbst wenn die Außenwandung des Dichtungsbalges abschnittsweise an der Innenwandung des doppelwandigen Bereichs anliegt.

Bevorzugt weist das Kugelgelenk einen Schaft mit einem teilweise oder vollständig umlaufenden Rillenprofil auf. Insbesondere ist der Schaft zumindest im Wesentlichen zylinderförmig ausgebildet und einstückig mit dem Gehäuse des Kugelgelenks ausgebildet. Die Rillen des Rillenprofils sind nicht nach Art eines Gewindes schraubenlinienförmig ausgebildet, sondern als mehrere in Richtung der Längserstreckung des Schaftes parallel zueinander angeordnete Einzelrillen ausgebildet, welche umlaufend oder nicht umlaufend ausgebildet sein können. Bei nicht umlaufend ausgebildeten Rillen erstrecken sich diese gemäß DE 102 23 306 A1 bei einer Betrachtung in einem Querschnitt durch den Schaft vorzugsweise in zwei gleich große, voneinander getrennte und gegenüberliegend angeordnete Umfangsabschnitte. Das dem Schaft zugeordnete Rillenprofil kann spanend oder spanlos, insbesondere durch Urformen oder Umformen, hergestellt sein.

Darüber hinaus schlägt die Erfindung einen Zweipunktlenker vor, insbesondere für ein Nutzfahrzeug, wobei der Zweipunktlenker ein Verbindungsrohr aufweist, welches zumindest in einem Endabschnitt mit einem Kugelgelenk wie zuvor beschrieben verbunden ist. Insbesondere ist der Endabschnitt des Verbindungsrohres formschlüssig und kraftschlüssig mit dem Schaft des Kugelgelenks verbunden. Hierzu ist der Innendurchmesser des Endabschnitts des Verbindungsrohres vorteilhaft geringfügig größer ausgebildet als der größte Außendurchmesser des Schaftes. Um eine zu dem Rillenprofil des Schaftes formkorrespondierende Rillenkontur des Endabschnitts des Verbindungsrohres zu erzeugen, wird der Schaft vorteilhaft in den zuvor erwärmten Endabschnitt des Verbindungsrohres eingeschoben. Anschließend werden beide Fügepartner durch Warmeinschlagen miteinander verbunden. Durch das Schrumpfen während des darauf folgenden Abkühlens des Endabschnitts des Verbindungsrohres wird neben der formschlüssigen Verbindung durch die formkorrespondierenden Rillenprofile auch eine kraftschlüssige Verbindung geschaffen.

Durch die wärmeisolierende Wirkung der Schutzkappe wird es möglich, das Kugelgelenk in komplett montiertem Zustand mit dem Endabschnitt des Verbindungsrohres durch Warmeinschlagen zu verbinden. Ein nachträgliches Montieren des Dichtungsbalges ist nicht mehr erforderlich. Die Schutzkappe verbleibt bevorzugt auch während einer sich an die Montage anschließenden Oberflächenbehandlung des Zweipunktlenkers sowie eines darauf folgenden Versandfertigmachens und des anschließenden Transports zum Kunden auf dem Kugelzapfen. Die Schutzkappe wird bevorzugt erst unmittelbar vor dem Verbau des Zweipunktlenkers im Fahrzeug, beispielsweise in einem Lastwagen oder einem Bus, wieder entfernt.

Insbesondere ist der Zweipunktlenker als Lenkstange, Spurstange, Stabilisator-Verbindungsstange, Bediengestänge oder Panhardstab ausgebildet.

Im Folgenden wird die Erfindung anhand lediglich Ausführungsbeispiele darstellender Zeichnungen näher erläutert, wobei sich gleiche Bezugszeichen auf gleiche Bauteile oder Elemente beziehen. Dabei zeigt:
- Fig. 1: in einer perspektivischen Darstellung eine Schutzkappe gemäß einer ersten Ausführungsform der Erfindung;
- Fig. 2: in einer Schnittdarstellung die Schutzkappe aus Figur 1;
- Fig. 3: in einer Schnittdarstellung eine Schutzkappe gemäß einer zweiten Ausführungsform der Erfindung;
- Fig. 4: in einer Schnittdarstellung ein Kugelgelenk mit einer Schutzkappe gemäß der ersten Ausführungsform und
- Fig. 5: in einer teilweise geschnittenen Darstellung einen Zweipunktlenker mit endseitig angeordneten Kugelgelenken, wobei eines der Kugelgelenke bereichsweise mit einer Schutzkappe gemäß der ersten Ausführungsform abgedeckt ist.

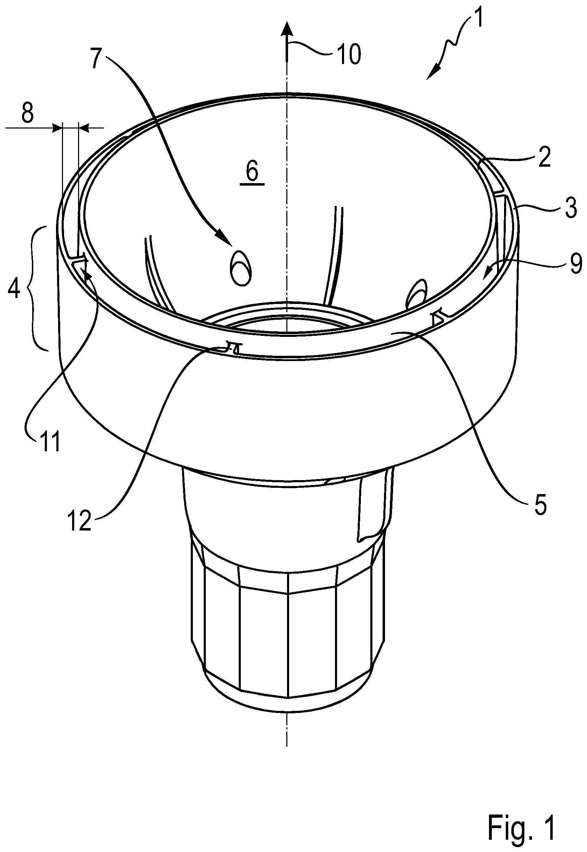

Fig. 1 zeigt eine Schutzkappe 1 zur bereichsweisen Abdeckung eines komplett montierten Kugelgelenks 30, wobei die Schutzkappe 1 eine Wandung 2 aufweist, die dazu geeignet ist, einen abzudeckenden Bereich des Kugelgelenks 30 zu umschließen. Zum bereichsweisen Schutz des Kugelgelenks 30 vor schädigender Wärmeeinwirkung weist die Schutzkappe 1 eine von der Wandung 2 beabstandete Zusatzwandung 3 auf. Durch die Wandung 2 und die von dieser beabstandete Zusatzwandung 3 wird ein doppelwandiger Bereich 4 der Schutzkappe 1 mit einer zwischenliegenden Luftschicht 5 geschaffen. Aufgrund einer wärmeisolierenden Wirkung der Luftschicht 5 wird verhindert, dass von außen auf den doppelwandigen Bereich 4 einwirkende Wärme zu einer Schädigung des Bereichs des komplett montierten Kugelgelenks 30 führt, welcher durch den doppelwandigen Bereich 4 der Schutzkappe 1 abdeckbar ist. Die Schutzkappe 1 mit Wandung 2 und Zusatzwandung 3 ist einstückig ausgeführt und aus Kunststoff gebildet. Die Zusatzwandung 3 ist ringartig geschlossen ausgebildet und radial außerhalb der Wandung 2 angeordnet. Die Wandung 2 und die Zusatzwandung 3 sind rotationssymmetrisch ausgebildet und konzentrisch zueinander angeordnet.

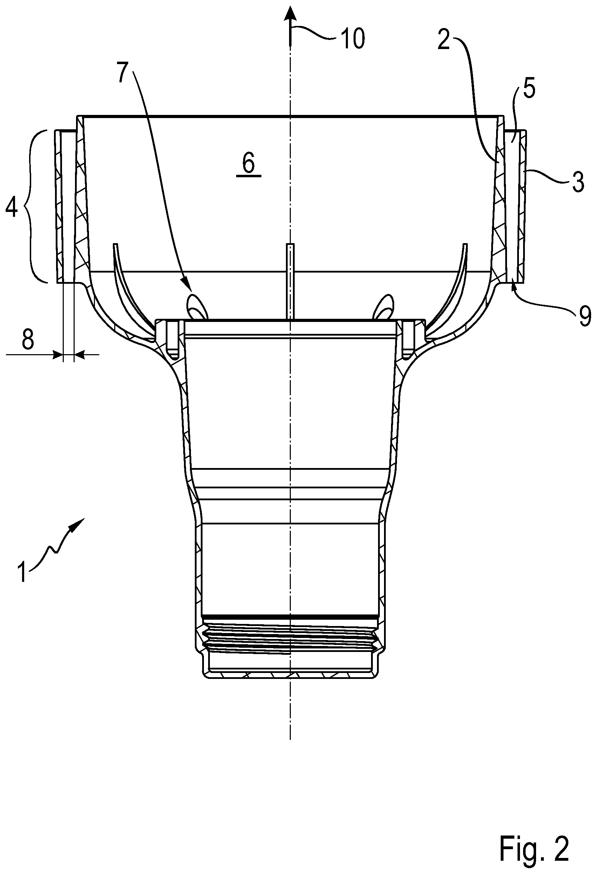

Wie in Fig. 2 erkennbar, ist die Schutzkappe 1 als vollständig geschlossener Becher ausgebildet, wobei in einem oberen Abschnitt 6, welcher in dem oberen Bereich des Bechers angeordnet ist, mehrere ringförmig angeordnete Ablauföffnungen 7 die Wandung 2 durchdringen. Der Abstand 8 zwischen der Wandung 2 und der Zusatzwandung 3 ist über den Verlauf der Zusatzwandung 3 konstant. Ein Zwischenraum 9 zwischen der Wandung 2 und der Zusatzwandung 3 ist in Axialrichtung 10 der Schutzkappe 1 beidseitig offen ausgebildet. Die Wandung 2 und die Zusatzwandung 3 sind in dem doppelwandigen Bereich 4 im Wesentlichen zylinderringförmig ausgebildet. Die zylinderringförmige Ausbildung weicht aufgrund herstellungsbedingt erforderlicher Entformungsschrägen geringfügig von einer exakten Zylinderform ab, da die Schutzkappe 1 als Kunststoff-Spritzgussteil ausgebildet ist. Die Wandung 2 und die Zusatzwandung 3 sind konzentrisch zueinander angeordnet. Infolgedessen ist der in Axialrichtung 10 der Schutzkappe 1 beidseitig offene Zwischenraum 9 ebenfalls im Wesentlichen zylinderringförmig ausgebildet. Der Abstand 8 zwischen der Wandung 2 und der Zusatzwandung 3 wird abschnittsweise durch eine Rippenstruktur 11 überbrückt. Die in Fig. 1 erkennbare Rippenstruktur 11 dient der Anbindung der Zusatzwandung 3 an die Wandung 2 und ist in dem Zwischenraum 9 angeordnet. Gleichzeitig ist die Rippenstruktur 11 einstückig mit der Wandung 2 und der Zusatzwandung 3 ausgebildet. Die Rippen 12 der Rippenstruktur 11 verlaufen in Axialrichtung 10 der Schutzkappe 1.

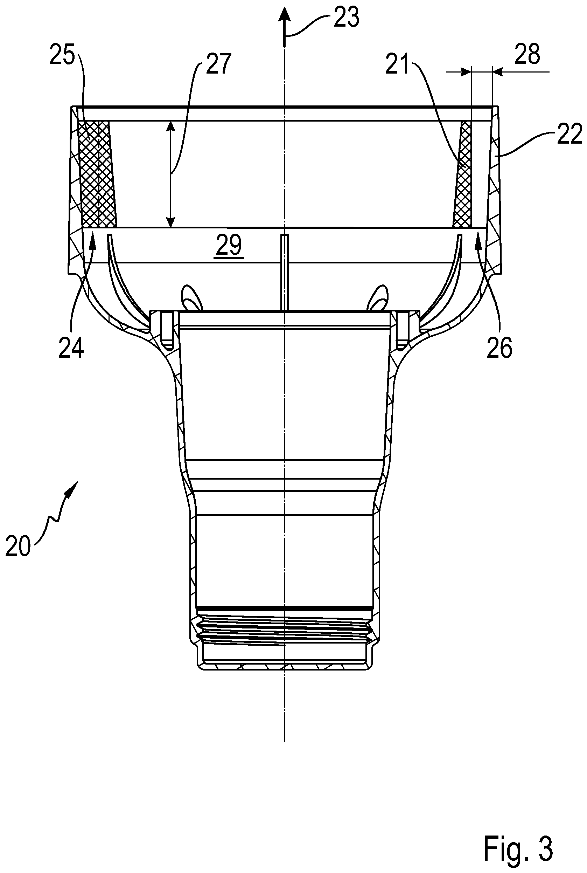

Fig. 3 zeigt eine Schutzkappe 20 mit einer Zusatzwandung 21, welche unter Ausbildung eines doppelwandigen Bereichs 27 radial innerhalb der Wandung 22 der Schutzkappe 20 angeordnet ist. Bei dieser Ausgestaltung bildet die Außenumfangsfläche der Wandung 22 gleichzeitig die Außenumfangsfläche der Schutzkappe 20. Die Außenumfangsfläche der Schutzkappe 20 weist in Axialrichtung 23 der Schutzkappe 20 einen kontinuierlichen Verlauf auf. Der Abstand 28 zwischen der Wandung 22 und der Zusatzwandung 21 ist abschnittsweise durch eine Rippenstruktur 24 mit fünf gleichmäßig über den Umfang verteilten Rippen 25 überbrückt. Die Zusatzwandung 21 und die Rippen 25 sind als separates Bauteil ausgebildet und in einen oberen Abschnitt 29 der Schutzkappe 20 eingepresst. Die in der linken Bildhälfte erkennbare Rippe 25 liegt in der Schnittebene und ist daher geschnitten dargestellt. In der rechten Bildhälfte liegt keine Rippe in der Schnittebene. Der Zwischenraum 26 zwischen der Wandung 22 und der Zusatzwandung 21 ist in Axialrichtung 23 der Schutzkappe 20 beidseitig offen ausgebildet.

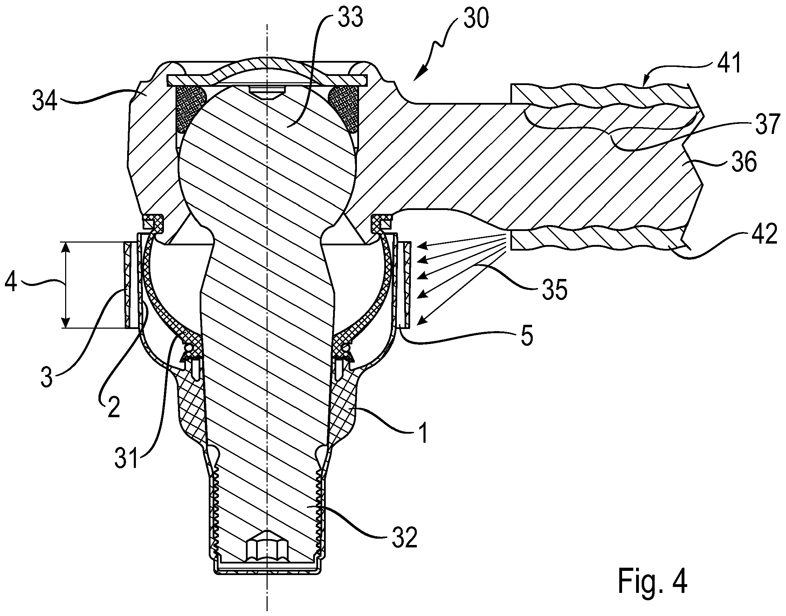

Fig. 4 zeigt ein Kugelgelenk 30 mit einem Dichtungsbalg 31, wobei der Dichtungsbalg 31 bereichsweise durch den doppelwandigen Bereich 4 der Schutzkappe 1 gemäß dem ersten Ausführungsbeispiel vor schädigender Strahlungswärme 35 geschützt ist. Das Kugelgelenk 30 weist einen Kugelzapfen 32 auf, welcher mit einer endseitig angeordneten Gelenkkugel 33 dreh- und schwenkbeweglich in einem Gehäuse 34 des Kugelgelenks 30 gelagert ist. Ein der Gelenkkugel 33 abgewandter Abschnitt des Kugelzapfens erstreckt sich aus einer Öffnung des Gehäuses 34 heraus, wobei die Gehäuseöffnung durch den Dichtungsbalg 31 abgedichtet ist. Während das Gehäuse 34 und der Kugelzapfen 32 aus unterschiedlichen Eisenwerkstoffen gebildet sind, besteht der Dichtungsbalg 31 aus einem Elastomerwerkstoff, welcher temperaturempfindlicher ist als die aus Eisenwerkstoffen gebildeten Teile des Kugelgelenks 30. Der Bereich der Außenoberfläche des Dichtungsbalges 31, welcher der Strahlungsquelle zugewandt ist, wird durch den doppelwandigen Bereich 4 der Schutzkappe 1 abgedeckt. Durch die wärmeisolierend wirkende Luftschicht 5 zwischen der Wandung 2 und der davon beabstandeten Zusatzwandung 3 ist der Schutz des Dichtungsbalges 31 vor Schäden durch Strahlungswärme 35 gewährleistet.

Das Kugelgelenk 30 weist einen Schaft 36 mit einem umlaufenden Rillenprofil 37 auf, wobei der Schaft 36 im Wesentlichen zylinderförmig ausgebildet und einstückig mit dem Gehäuse 34 des Kugelgelenks 30 ausgebildet ist. Die Rillen des Rillenprofils 37 sind als mehrere in Richtung der Längserstreckung des Schaftes 36 parallel zueinander angeordnete Einzelrillen ausgebildet. Die Rillen sind spanend hergestellt.

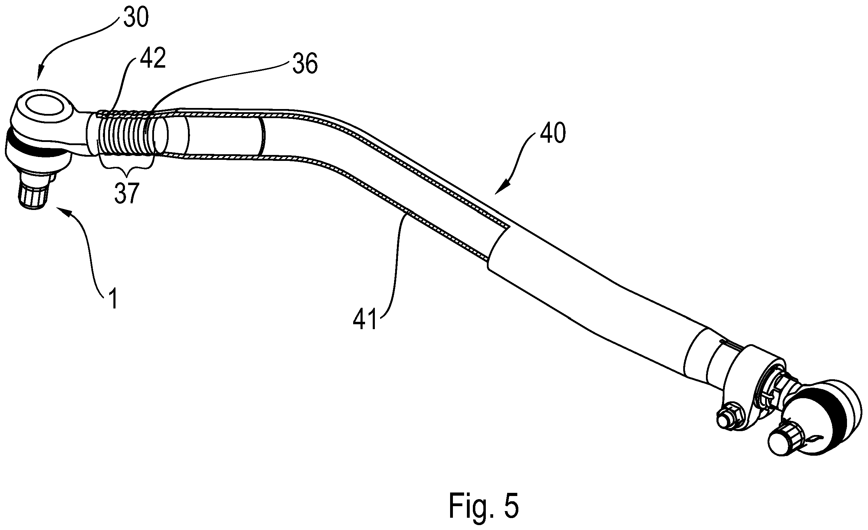

Fig. 5 zeigt einen als Lenkstange 40 ausgebildeten Zweipunktlenker, welcher insbesondere für ein Nutzfahrzeug geeignet ist. Die Lenkstange 40 weist ein Verbindungsrohr 41 auf, welches in einem Endabschnitt 42 mit dem zuvor beschriebenen Kugelgelenk 30 verbunden ist. Der Endabschnitt 42 des Verbindungsrohres 41 ist form-schlüssig und kraftschlüssig mit dem Schaft 36 des Kugelgelenks 30 verbunden. Der Innendurchmesser des Endabschnitts 42 des Verbindungsrohres 41 ist geringfügig größer ausgebildet als der größte Außendurchmesser des Schaftes 36. Um eine zu dem Rillenprofil 37 des Schaftes 36 formkorrespondierende Rillenkontur des Endabschnitts 42 des Verbindungsrohres 41 zu erzeugen, wird der Schaft 36 in den zuvor erwärmten Endabschnitt 42 des Verbindungsrohres 41 eingeschoben. Anschließend werden beide Fügepartner durch Warmeinschlagen miteinander verbunden. Durch das Schrumpfen während des darauf folgenden Abkühlens des Endabschnitts 42 des Verbindungsrohres 41 wird neben der formschlüssigen Verbindung durch die formkorrespondierenden Rillenprofile auch eine kraftschlüssige Verbindung geschaffen. Um den relativ temperaturempfindlichen Dichtungsbalg 31 während des Abkühlens des Endabschnitts 42 vor einer Schädigung durch Strahlungswärme zu schützen, wird dieser durch den doppelwandigen Bereich 4 der Schutzkappe abgedeckt.

### Bezugszeichen

- 1: Schutzkappe
- 2: Wandung
- 3: Zusatzwandung
- 4: doppelwandiger Bereich
- 5: Luftschicht
- 6: oberer Abschnitt
- 7: Ablauföffnung
- 8: Abstand
- 9: Zwischenraum
- 10: Axialrichtung
- 11: Rippenstruktur
- 12: Rippe

- 20: Schutzkappe
- 21: Zusatzwandung
- 22: Wandung
- 23: Axialrichtung
- 24: Rippenstruktur
- 25: Rippe
- 26: Zwischenraum
- 27: doppelwandiger Bereich
- 28: Abstand
- 29: oberer Abschnitt

- 30: Kugelgelenk
- 31: Dichtungsbalg
- 32: Kugelzapfen
- 33: Gelenkkugel
- 34: Gehäuse
- 35: Strahlungswärme
- 36: Schaft
- 37: Rillenprofil

- 40: Zweipunktlenker, Lenkstange
- 41: Verbindungsrohr
- 42: Endabschnitt

## Patentansprüche

1. Kugelgelenk (30) mit einem Dichtungsbalg (31) und einer Schutzkappe (1, 20) zur bereichsweisen Abdeckung des komplett montierten Kugelgelenks (30), wobei die Schutzkappe (1, 20) eine rotationssymmetrisch ausgebildete Wandung (2, 22) aufweist, die dazu geeignet ist, einen abzudeckenden Bereich des Kugelgelenks (30) zu umschließen, **dadurch gekennzeichnet, dass** die Schutzkappe (1, 20) zum bereichsweisen Schutz des Kugelgelenks (30) vor schädigender Wärmeeinwirkung zumindest eine rotationssymmetrisch ausgebildete und von der Wandung (2, 22) beabstandete Zusatzwandung (3, 21) aufweist, sodass durch die Wandung (2, 22) und die Zusatzwandung (3, 21) ein doppelwandiger Bereich (4, 27) der Schutzkappe mit einer zwischenliegenden Luftschicht (5) geschaffen wird, wobei der Dichtungsbalg (31) zumindest bereichsweise durch den doppelwandigen Bereich (4, 27) der Schutzkappe (1, 20) vor schädigender Wärmeeinwirkung, insbesondere Strahlungswärme, geschützt ist, wobei ein Zwischenraum (9, 26) zwischen der Wandung (2, 22) und der Zusatzwandung (3, 21) zwei in Axialrichtung (10, 23) der Schutzkappe (1, 20) gegenüberliegende Öffnungen aufweist.

2. Kugelgelenk (30) nach Anspruch 1, **dadurch gekennzeichnet, dass** die Zusatzwandung (3, 21) ringartig geschlossen ausgebildet ist.

3. Kugelgelenk (30) nach Anspruch 1 oder 2, **dadurch gekennzeichnet, dass** die Zusatzwandung (3) radial außerhalb der Wandung (2) angeordnet ist.

4. Kugelgelenk (30) nach Anspruch 1 oder 2, **dadurch gekennzeichnet, dass** die Zusatzwandung (21) radial innerhalb der Wandung (22) angeordnet ist.

5. Kugelgelenk (30) nach einem der vorhergehenden Ansprüche, **dadurch gekennzeichnet, dass** der Abstand (8) zwischen der Wandung (2, 22) und der Zusatzwandung (3, 21) über den Verlauf der Zusatzwandung (3, 21) konstant ist.

6. Kugelgelenk (30) nach einem der vorhergehenden Ansprüche, **dadurch gekennzeichnet, dass** die Wandung (2, 22) und die Zusatzwandung (3, 21) in dem doppelwandigen Bereich (4, 27) zumindest im Wesentlichen zylinderringförmig ausgebildet sind.

7. Kugelgelenk (30) nach einem der vorhergehenden Ansprüche, **dadurch gekennzeichnet, dass** der Abstand (8, 28) zwischen der Wandung (2, 22) und der Zusatzwandung (3, 21) abschnittsweise durch eine Rippenstruktur (11, 24) überbrückt wird.

8. Kugelgelenk (30) nach Anspruch 8, **dadurch gekennzeichnet, dass** die Rippen (12, 25) der Rippenstruktur in Axialrichtung (10, 23) der Schutzkappe (1, 20) verlaufen.

9. Kugelgelenk (30) nach einem der vorhergehenden Ansprüche, **dadurch gekennzeichnet, dass** das Kugelgelenk (30) einen Schaft (36) mit einem teilweise oder vollständig umlaufenden Rillenprofil (37) aufweist.

10. Zweipunktlenker (40), insbesondere für ein Nutzfahrzeug, **dadurch gekennzeichnet, dass** der Zweipunktlenker (40) ein Verbindungsrohr (41) aufweist, welches zumindest in einem Endabschnitt (42) mit einem Kugelgelenk (30) gemäß einem der vorhergehenden Ansprüche verbunden ist.

11. Zweipunktlenker (40) nach Anspruch 10, **dadurch gekennzeichnet, dass** der Zweipunktlenker als Lenkstange (40), Spurstange, Stabilisator-Verbindungsstange, Bediengestänge oder Panhardstab ausgebildet ist.

## Claims

1. Ball joint (30) having a sealing bellows (31) and a protective cap (1, 20) for covering the completely mounted ball joint (30) in certain regions, wherein the protective cap (1, 20) has a rotationally symmetrically formed wall (2, 22) which is suitable for enclosing a region of the ball joint (30) that is to be covered, **characterized in that**, in order to protect the ball joint (30) in certain regions from the damaging effect of heat, the protective cap (1, 20) has at least one rotationally symmetrically formed additional wall (3, 21) spaced apart from the wall (2, 22), with the result that a double-walled region (4, 27) of the protective cap having an interposed air layer (5) is created by the wall (2, 22) and the additional wall (3, 21), wherein the sealing bellows (31) is protected at least in certain regions by the double-walled region (4, 27) of the protective cap (1, 20) from the damaging effect of heat, in particular radiant heat, wherein an interspace (9, 26) between the wall (2, 22) and the additional wall (3, 21) has two openings which are situated opposite in the axial direction (10, 23) of the protective cap (1, 20) .

2. Ball joint (30) according to Claim 1, **characterized in that** the additional wall (3, 21) is designed to be closed in a ring-like manner.

3. Ball joint (30) according to Claim 1 or 2, **characterized in that** the additional wall (3) is arranged radially outside the wall (2).

4. Ball joint (30) according to Claim 1 or 2, **characterized in that** the additional wall (21) is arranged radially inside the wall (22).

5. Ball joint (30) according to one of the preceding claims, **characterized in that** the distance (8) between the wall (2, 22) and the additional wall (3, 21) is constant over the profile of the additional wall (3, 21).

6. Ball joint (30) according to one of the preceding claims, **characterized in that** the wall (2, 22) and the additional wall (3, 21) are designed to be at least substantially cylinder ring-shaped in the double-walled region (4, 27).

7. Ball joint (30) according to one of the preceding claims, **characterized in that** the distance (8, 28) between the wall (2, 22) and the additional wall (3, 21) is bridged in certain portions by a ribbed structure (11, 24).

8. Ball joint (30) according to Claim 8, **characterized in that** the ribs (12, 25) of the ribbed structure extend in the axial direction (10, 23) of the protective cap (1, 20).

9. Ball joint (30) according to one of the preceding claims, **characterized in that** the ball joint (30) has a shaft (36) with a partially or completely peripheral grooved profile (37).

10. Two-point link (40), in particular for a commercial vehicle, **characterized in that** the two-point link (40) has a connecting tube (41) which is connected at least in an end portion (42) to a ball joint (30) according to one of the preceding claims.

11. Two-point link (40) according to Claim 10, **characterized in that** the two-point link is designed as a steering rod (40), track rod, stabilizer connecting rod, control linkage or Panhard rod.

## Revendications

1. Joint à rotule (30) avec un soufflet d'étanchéité (31) et un capuchon de protection (1, 20) pour le recouvrement local du joint à rotule entièrement monté (30), dans lequel le capuchon de protection (1, 20) présente une paroi de forme symétrique de révolution (2, 22), qui convient pour entourer une région à recouvrir du joint à rotule (30), **caractérisé en ce que** le capuchon de protection (1, 20) présente pour la protection locale du joint à rotule (30) contre l'action néfaste de la chaleur au moins une paroi supplémentaire (3, 21) de forme symétrique de révolution et espacée de la paroi (2, 22), de façon à créer avec la paroi (2, 22) et la paroi supplémentaire (3, 21) une région à double paroi (4, 27) du joint à rotule avec une couche d'air intermédiaire (5), dans lequel le soufflet d'étanchéité (31) est protégé au moins localement par la région à double paroi (4, 27) du capuchon de protection (1, 20) contre l'action néfaste de la chaleur, en particulier la chaleur rayonnante, dans lequel un espace intermédiaire (9, 26) entre la paroi (2, 22) et la paroi supplémentaire (3, 21) présente deux ouvertures opposées dans la direction axiale (10, 23) du capuchon de protection (1, 20).

2. Joint à rotule (30) selon la revendication 1, **caractérisé en ce que** la paroi supplémentaire (3, 21) est réalisée sous forme annulaire fermée.

3. Joint à rotule (30) selon une revendication 1 ou 2, **caractérisé en ce que** la paroi supplémentaire (3) est disposée radialement à l'extérieur de la paroi (2).

4. Joint à rotule (30) selon une revendication 1 ou 2, **caractérisé en ce que** la paroi supplémentaire (21) est disposée radialement à l'intérieur de la paroi (22).

5. Joint à rotule (30) selon l'une quelconque des revendications précédentes, **caractérisé en ce que** la distance (8) entre la paroi (2, 22) et la paroi supplémentaire (3, 21) est constante sur le tracé de la paroi supplémentaire (3, 21).

6. Joint à rotule (30) selon l'une quelconque des revendications précédentes, **caractérisé en ce que** la paroi (2, 22) et la paroi supplémentaire (3, 21) sont réalisées au moins essentiellement sous forme cylindrique dans la région à double paroi (4, 27).

7. Joint à rotule (30) selon l'une quelconque des revendications précédentes, **caractérisé en ce que** la distance (8, 28) entre la paroi (2, 22) et la paroi supplémentaire (3, 21) est occupée partiellement par une structure de nervures (11, 24).

8. Joint à rotule (30) selon la revendication 8, **caractérisé en ce que** les nervures (12, 25) de la structure de nervures s'étendent dans la direction axiale (10, 23) du capuchon de protection (1, 20).

9. Joint à rotule (30) selon l'une quelconque des revendications précédentes, **caractérisé en ce que** le joint à rotule (30) présente un arbre (36) avec un profil rainuré (37) partiellement ou complètement périphérique.

10. Bras de suspension à deux points (40) en particulier pour un véhicule utilitaire, **caractérisé en ce que** le bras de suspension à deux points (40) présente un tube d'assemblage (41), qui est assemblé au moins dans une section d'extrémité (42), à un joint à rotule (30) selon l'une quelconque des revendications précédentes.

11. Bras de suspension à deux points (40) selon la revendication 10, **caractérisé en ce que** le bras de suspension forme une bielle de direction (40), une barre de connexion, une barre de liaison de stabilisateur, une tige de commande ou une barre Panhard.
